# EUROPÄISCHE PATENTSCHRIFT

(11) **EP 1 797 761 B1**
(45) Veröffentlichungstag und Bekanntmachung des Hinweises auf die Patenterteilung: **24.06.2009**
(21) Anmeldenummer: 06025483.6
(22) Anmeldetag: 08.12.2006
(51) Int. Cl.: A22C 7/00, A22C 11/02

(54) **Verfahren und Vorrichtung zum Umverteilen von pastösem Füllgut**
Method and device for redistribution of paste filling
Procédé et dispositif destinés à la redistribution de produits de remplissage pâteux

(30) Priorität: 16.12.2005 DE 102005060328
(43) Veröffentlichungstag der Anmeldung: 20.06.2007
(73) Patentinhaber: Poly-clip System GmbH & Co. KG, 60489 Frankfurt am Main (DE)
(72) Erfinder: Sames, Jörg, 35418 Buseck (DE)
(74) Vertreter: Fritsche, Rainer

(56) Entgegenhaltungen:
- EP-A1- 1 174 035
- WO-A-94/07370
- DE-C1- 3 121 101
- US-A- 5 468 179
- US-A- 5 885 150

## Beschreibung

Die Erfindung betrifft ein Verfahren und eine Vorrichtung zum Umverteilen von pastösem Füllgut in einer verschlossenen, vereinzelten, schlauch- oder beutelförmigen Verpackungshülle. Sie betrifft ferner eine Herstellanlage für mit pastösem Füllgut (schlaff) gefüllte Würste mit einem Füllrohr, durch welches das Füllgut in eine über den Außenumfang des Füllrohres zugeführte schlauch- oder beutelförmigen Verpackungshülle einbringbar ist, und einer stromabwärts der Füllrohrmündung angeordneten Verschließvorrichtung zum Abteilen einer Wurst, Verschließen derselben mittels Verschlussklammern und vereinzeln der verschlossenen Wurst von der gefüllten Verpackungshülle.

Das Füllgut wird in solchen Herstellanlagen bekanntermaßen mittels einer Füllvorrichtung unter Druck in das daran angeschlossene Füllrohr eingebracht und in diesem zur Verschließvorrichtung transportiert oder geleitet. Auf dem Außenumfang trägt und führt das Füllrohr die Verpackungshülle ebenfalls zur Verschließvorrichtung. Aus der nahe der Verschließvorrichtung befindlichen Mündung des Füllrohres tritt das Füllgut aus diesem aus und wird so in die zuvor mittels einer Verschlussklammer einseitig verschlossenen Schlauchhülle oder in die beutelförmige Verpackungshülle eingefüllt. Ist eine vorgegebene oder gewünschte Portionsgröße erreicht, teilt die Verschließvorrichtung eine Wurst von der gefüllten Schlauchhülle ab, in dem sie diese mittels Einschnürelementen lokal zu einen Schlauchzopf einschnürt. Wurst bezeichnet hierbei nicht einen bestimmten Inhalt (beispielsweise das Nahrungsmittel) sondern die herstellungsbedingte Form des Endprodukts. Im Bereich des Schlauchzopfes werden dann mittels Verschließwerkzeugen (Matrize und Stempel) zwei axial versetzte Verschlussklammern um die Schlauchhülle gesetzt und verschlossen. Danach wird die Schlauchhülle mittels eines Messers zwischen den beiden Verschlusselementen durchtrennt und die verschlossene Wurst vereinzelt.

Alternativ zur eingangs genannten Herstellanlage mit einer Verschließvorrichtung ist beispielsweise aus der DE 100 55 310 eine Herstellanlage mit einer Abdrehvorrichtung zum Verschließen von Würsten bekannt, der eine Längeneinheit zum kontrollierten Abführen der abgedrehten Würste nachgeschaltet ist. Dabei wird mittels zweier zu dem Füllprozess synchronisierter Transportbänder ein gleichmäßiger Zug auf den Strang aneinander hängender Würste ausgeübt, um unabhängig vom Füllgutausstoßverlauf eine gleichmäßige Länge aller Würste zu erzielen.

Der Zweck der eingangs genannten Vorrichtung bzw. des eingangs genannten Verfahrens zum Umverteilen von pastösem Füllgut in einer der Art hergestellten Verpackungshülle ist es hingegen, Würste mit einem frei wählbaren, insbesondere nicht-runden Querschnitt herzustellen. Hierzu ist es notwendig, dass die in der Regel einen runden Querschnitt aufweisende Verpackungshülle nicht prall sondern schlaff, d. h. nur teilweise mit Füllgut, beispielsweise Wurstbrät oder dergleichen gefüllt ist. Nur wenn die Verpackung schlaff bleibt, kann sie anschließend verformt werden. Eine schlaffe Verpackung wird bekannter Weise mittels einer Verschließvorrichtung erzeugt, bei der das Abteilen nach dem Prinzip der Spreizverdrängung vonstatten geht. Hierbei werden die Einschnür- oder Verdrängerelemente zunächst radial im Bezug auf die Verpackungshülle scherenartig zusammengefahren, um diese einzuschnüren. Anschließend werden sie axial auseinander gefahren, um den Einschnürbereich zu verlängern und auf diese Weise einen ungefüllten Verpackungshüllenabschnitt zu erzeugen, in welchen nach dem Verschließen das Füllgut umverteilt werden kann.

Um eine Wurst mit dem gewünschten Querschnitt zu erzeugen, wird die schlaffe Verpackungshülle in einen Formkasten eingebracht. Dazu muss das Füllgut aber zunächst möglichst gleichmäßig über die gesamte Länge der Verpackungshülle verteilt werden, da diese sich sonst nicht in den Formkasten drücken lässt. Das Umverteilen geschieht von Hand. Da viele Wurstprodukte mit einem sehr zähen, teilweise fasrige und/oder nicht fließfähige Bestandteile enthaltendem Füllgut befüllt sind, ist das Umverteilen des Füllguts in der Verpackungshülle ein sehr kräftezerrender Prozess, der viel Handkraft erfordert. Hinzu kommt, dass solche Wurstprodukte ein hohes Gewicht aufweisen, welches von den Arbeitern bewegt werden muss. Aus den Patentschriften WO-94/07370 und US-5468179 sind hierzu Vorrichtungen bekannt, welche sich an eine Füllmaschine anschließen.

Aufgabe der Erfindung ist es daher, eine Vorrichtung bzw. ein Verfahren zum Umverteilen von pastösem Füllgut in einer verschlossenen schlauch- oder beutelförmiger Verpackungshülle bereitzustellen, um die kräftezerrende Handarbeit zu vermeiden und den Wurstherstellungsprozess effizienter zu gestalten.

Die Aufgabe wird einerseits durch eine Herstellanlage der eingangs genannten Art mit den Merkmalen des Anspruches 1, gelöst.

Die Aufgabe wird ferner durch ein Verfahren der eingangs genannten Art mit den in Anspruch 7 angegebenen

In einer bevorzugten Weiterbildung der Herstellanlage sind die Förderbänder so zueinander anstellbar, dass sich der Durchlassquerschnitt in Förderrichtung verjüngt.

Dies sorgt dafür, dass die Verpackungshülle nicht abrupt sondern graduell in die endgültig gewünschte Form gequetscht wird, so dass das Füllgut mehr Zeit hat, in den zunächst leeren Abschnitt der Verpackungshülle zu fließen. Die Gefahr des Platzens der Verpackungshülle während der Umformung wird auf diese Weise reduziert.

In einer vorteilhaften Weiterbildung weist die Vorrichtung einen gegenüber dem Durchlassquerschnitt aufgeweiteten Einlaufbereich der Förderbänder auf, der sich in Förderrichtung auf den Durchlassquerschnitt verjüngt.

Der Einlaufbereich bewirkt, dass eine zugeführte Wurst insbesondere bei automatischer Zuführung sicher eingeführt und von der Vorrichtung zum Umverteilen übernommen wird. Je nach Stärke der Umformung und Kaliber der Verpackungshülle kann es genügen die zuführseitigen Umlenkrollen der Förderbänder mit ausreichendem großem Durchmesser zu dimensionieren, damit die Förderbänder an der Verpackungshülle mit einem tangentialen Abschnitt angreifen, der einen ausreichend spitzen Winkel bildet, um ein sicheres Greifen der Verpackungshülle zu gewährleisten. In einer anderen Ausgestaltung weisen die Förderbänder den ersten Bandabschnitten vorgelagerte zweite Bandabschnitte (Einlaufbandabschnitte) auf. Diese laufen unter einem Winkel aufeinander zu, der größer ist als der Winkel zwischen den ersten Bandabschnitten - sofern die Förderbänder im Bereich der ersten Bandabschnitte überhaupt winklig zueinander angestellt sind - also einen sich verjüngenden Durchlassquerschnitt aufweisen, und bilden somit einen Einlauftrichter.

Bevorzugt sind die Förderbänder an einer gemeinsamen Tragstruktur angeordnet, wobei wenigstens eines der Förderbänder von wenigstens zwei in Förderrichtung versetzten und quer zur Förderrichtung unabhängig verstellbaren Tragelementen gehalten wird, mittels denen sowohl der Durchlassquerschnitt als auch die Anstellung der Förderbänder zueinander verändert werden kann.

Mittels der unabhängig verstellbaren Tragelemente können die Förderbänder wahlweise im Einlaufbereich, im Auslaufbereich oder in beiden Bereichen gleichzeitig relativ zu einander verstellt werden. Somit kann sowohl der Durchlassquerschnitt als auch der Anstellwinkel der Förderbänder insbesondere im Bereich ihres ersten Bandabschnitts auf die Form und das Kaliber der Wurst und/oder die Fließeigenschaften des Füllguts eingestellt werden.

Bei der eingangs genannten Herstellanlage ist die Vorrichtung zum Umverteilen des Füllgutes gemäß einer der vorstehenden Ausgestaltungen erfindungsgemäß stromabwärts der Verschließvorrichtung angeordnet.

Die Herstellanlage stellt eine höhere Automatisierungsstufe dar, bei der die Vorrichtung zum Umverteilen in den Herstellprozess eingeschaltet ist, so dass die verschlossene, schlaff gefüllte Verpackungshülle unmittelbar oder mittelbar von der Verschließvorrichtung abgenommen und anschließend umgeformt wird. Dabei ist darauf zu achten, dass die Förderbänder nicht ungewollt an der Verpackungshülle ziehen, bevor die Wurst verschlossen und vereinzelt ist. Dies wird beispielsweise durch einen ausreichenden Abstand der Vorrichtung zum Umverteilen zu der Verschließvorrichtung erreicht, der größer als die gewünschte Produktlänge ist. Bekannt ist, dass die vereinzelte Wurst über eine geneigte Rutsche abgeführt wird, den Ende in einer erfindungsgemäßen Herstellanlage dann beispielsweise in die Vorrichtung zum Umverteilen münden kann. Auf eine Synchronisation zwischen Füllgutausstoß bzw. Verschließvorrichtung und den Förderbändern der Vorrichtung zum Umverteilen kommt es dann nicht mehr an, was den Produktionsablauf vereinfacht. Durch automatisches Zu- und Einführen der Verpackungshülle muss keine körperliche Kraft aufgewendet werden.

Erfindungsgemäß ist zwischen die Verschließvorrichtung und die Vorrichtung zum Umverteilen des Füllguts ein Transportband zum Abfördern und Zuführen der verschlossenen Wurst eingeschaltet.

Indem das Transportband und die erfindungsgemäße Vorrichtung zum Umverteilen aufeinander ausgerichtet werden, wird eine genauere Zuführung und Übergabe der Wurst sichergestellt. Da bei bekannten Verschließvorrichtungen ein solches Transportband zum Abfördern einer fertig verschlossenen und vereinzelten Wurst oftmals bereits vorhanden ist, stellt diese Weiterbildung der Herstellanlage einen modularen Aufbau bekannter Herstellanlagen dar, bei dem die Vorrichtung zum Umverteilen bei Bedarf, d.h. bei Herstellung von formbaren Wurstprodukten, eingefügt und ansonsten entfernt werden kann.

Bevorzugt weist die Herstellanlage einen der Vorrichtung zum Umverteilen des Füllguts nachgeschalteten Formkasten zur Formgebung der Wurst auf.

Nachdem die Verpackungshülle in der erfindungsgemäßen Vorrichtung zum Umverteilen auf den gewünschten Durchlassquerschnitt über die gesamte Länge der Verpackungshülle umverteilt wurde, passt diese nun ohne größere Kraftaufwendung in den Formkasten hinein. Sie kann beispielsweise automatisch oder manuell in den Formkasten eingebracht werden. Nach dem Einsetzen der Verpackung in den Formkasten wird das von der Verpackungshülle eingeschlossene Füllgut typischer Weise noch einmal gleichmäßig im Formkasten verteilt und mittels eines Deckels in Form gepresst und durch Kochen so stabilisiert, dass es seine Form auch nach Entnahme aus dem Formkasten beibehält.

Weitere Aufgaben, Merkmale und Vorteile der Erfindung werden anhand eines Ausführungsbeispiels mit Hilfe der Zeichnungen näher erläutert. Es zeigen:
- Fig. 1: eine schematische Darstellung einer Herstellanlage mit einer erfindungsgemäßen Vorrichtung zum Umverteilen von pastösem Füllgut und
- Fig. 2: einen schematisierten Querschnitt der Förderbänder im Bereich der ersten Bandabschnitte in einer Ebene senkrecht zur Förderrichtung.

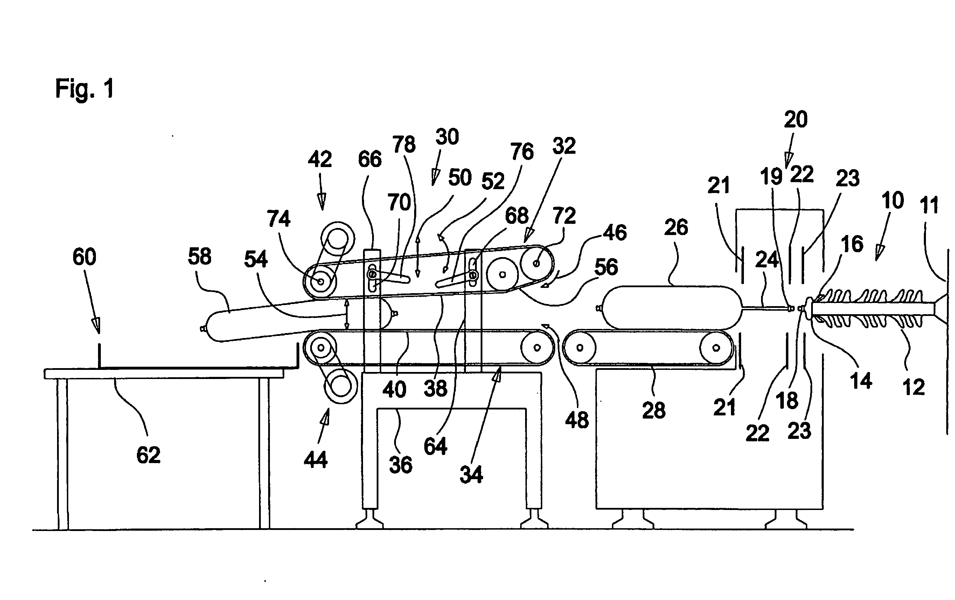

Die erfindungsgemäße Herstellanlage weist, wie in Fig. 1 gezeigt, ein Füllrohr 10, eine sich stromabwärts anschließende Schließvorrichtung 20, eine weiter stromabwärts angeordnete erfindungsgemäße Vorrichtung 30 zum Umverteilen des Füllgutes und einen dahinter aufgestellten Formkasten 60 zum Aufnehmen der Verpackungshülle mit umverteilten Füllgut auf.

Das Füllrohr 10 ist anschlussseitig an einer nicht näher dargestellte Füllmaschine angeflanscht, welche lediglich durch einen Wandabschnitt 11 symbolisiert ist. Auf dem Außenumfang des Füllrohrs 10 ist ein raupenartig gestauchter Verpackungshüllenvorrat 12 angeordnet, welcher in bekannter Weise durch einen nahe der Mündung 14 auf dem Füllrohr 10 angeordneten Bremsring 16 vom Füllrohr 10 abgezogen wird. Das Abziehen erfolgt bekanntermaßen durch den Druck des Füllgutausstoßes in die zuvor mittels einer Verschlussklammer 18 einseitig verschlossenen Verpackungs- oder Schlauchhülle.

Ist die Verpackungshülle mit der gewünschten und/oder voreingestellten Menge an Füllgut befüllt, beginnt der Einschnür- und Verschließvorgang mittels der Verschließvorrichtung 20. Hierbei werden wenigstens zwei, im dargestellten Ausführungsbeispiel gemäß Fig. 1 genauer drei Paare von Einschnürelemente 21, 22, 23 scherenartig zusammengefahren. Sie schnüren auf diese Weise die gefüllte Schlauchhülle radial ein. Daraufhin beginnt die Spreizverdrängung, indem wenigstens 2 Paare der Einschnürelemente 21, 22 axial auseinander gefahren werden. So wird ein ungefüllter Verpackungsabschnitt 24 erzeugt, indem Verpackungshüllenmaterial ohne Füllung von dem Vorrat 12 abgezogen wird. Anschließend werden zwei Verschlusselemente 18, 19 mittels zweier Paare von Verschließwerkzeugen (Stempel und Matrize, nicht dargestellt) nebeneinander auf den Schlauchzopf gesetzt und um diesen herum verschlossen. Zuletzt wird der Schlauchzopf zwischen den Verschlusselementen 18, 19 durchtrennt und die gefüllte Wurst 26 somit vereinzelt.

Die Wurst 26 mit in axialer Richtung noch ungleicher Füllgutverteilung wird von einem der Verschließvorrichtung 20 zugeordneten, aktiv angetriebenen Transportband 28 abgefördert.

Die erfindungsgemäße Vorrichtung zum Umverteilen 30 weist zwei Förderbänder 32, 34 auf, welche im Wesentlichen parallel auf einem Gestell 36 angeordnet sind. Die Förderbänder 32, 34 weisen jeweils erste einander zugewandte Bandabschnitte 38 bzw. 40 und jeweils einen zugeordneten Antrieb 42 bzw. 44 auf. Die Antriebe treiben die Förderbänder so an, dass sie mit den einander zugewandten Bandabschnitten 38, 40 im Wesentlichen gleichlaufend von der Verschließvorrichtung 20 wegfördern. Dies wird durch die Richtungspfeile 46, 48 symbolisiert.

Das Gestell 36 trägt eine in dieser Darstellung vereinfacht dargestellte Tragstruktur in Form zweier vertikaler und in Förderrichtung versetzter Tragelemente oder Holme 64, 66, an welchen das obere Förderband 32 jeweils unabhängig verstellbar angeordnet ist.Die Förderbänder können durch eine Verstellung an den Holmen 64, 66 relativ zueinander und quer zur Förderrichtung (vertikal) einerseits parallel auf einander zu bzw. von einander weg bewegt werden. Dies wird durch den Doppelpfeil 50 symbolisiert. Andererseits können die Förderbänder aber auch relativ zueinander in Förderrichtung so geneigt werden, dass sich ein Anstellwinkel mit einem gewünschten Betrag einstellen lässt, symbolisiert durch den Doppelpfeil 52. In nicht näher dargestellter Weise kann zu diesem Zweck das oberer Förderband 32 entlang jeweils eines Langlochs 68 und 70 in jedem der Holme 64 bzw. 66 entweder vorne, hinten (in Bezug auf die Förderrichtung) oder an beiden Enden in vertikaler Richtung verstellt und mittels zweier Klemmhebel 76, 78 in der gewünschten Position arretiert werden. In der in Figur 1 gezeigten Anordnung sind die beiden Förderbänder 32, 34 unter einem spitzen Winkel zueinander angestellt, so dass sich am Ende der Förderbänder der minimale Durchlassquerschnitt 54 ergibt.

In einem Einlaufbereich weist eines der Förderbänder hier das obere Förderband 32, einem dem ersten Bandabschnitt 38 vorgelagerten zweiten Bandabschnitt 56 auf, welcher unter einem Winkel auf das untere Förderband 34 zuläuft, der größer ist, als der Anstellwinkel zwischen den beiden ersten zueinander Bandabschnitten 38, 40. Anders als in Figur 1 können auch beide Förderbänder schräge zweite Bandabschnitte aufweisen, wodurch der Einlaufbereich eine Trichterform annimmt. Die durch das Transportband 28 zugeführte Wurst 26 mit ungleicher Verteilung des darin befindlichen Füllguts wird im Einlaufbereich von den beiden Förderbändern 32, 34 sicher erfasst und in den Bereich der ersten Bandabschnitte 38, 40 hineingezogen. Beim Fördern durch die Vorrichtung 30 wird die Wurst dann auf den Durchlassquerschnitt 54 am Ende der Förderbänder verjüngt. Dabei verteilt sich das Füllgut innerhalb der Wursthülle gleichmäßig über deren gesamte Länge, wenn der Durchlassquerschnitt 54, die Füllmenge, das Kaliber und die Länge der Wurst 26 richtig aufeinander abgestimmt sind.

Die so umgeformte Wurst 58 wird ausgangsseitig von den Förderbänder 32, 34 an einem nachgelagerten Formkasten 60 abgegeben, der wie hier gezeigt wird, auf einem Gestell 62 gelagert ist.

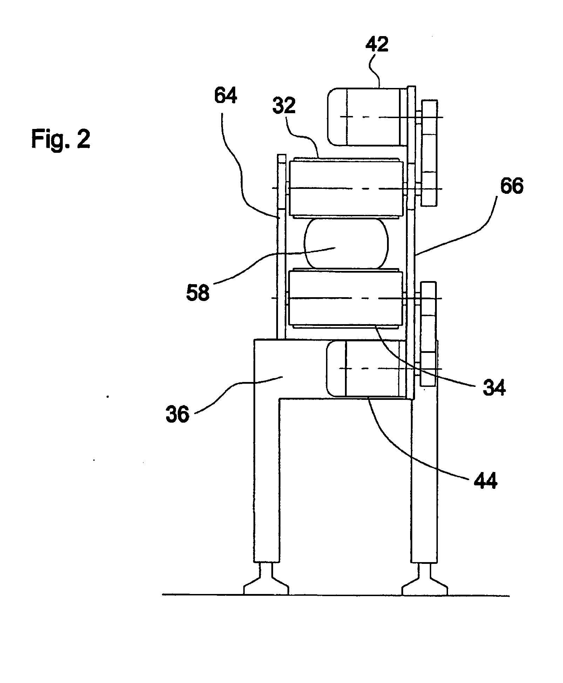

In Fig. 2 sind die Förderbänder 32, 34 im Bereich der ersten Bandabschnitte in einer Ebene senkrecht zur Förderrichtung geschnitten dargestellt. Die einander zugewandten ersten Bandabschnitte der Förderbänder der erfindungsgemäßen Vorrichtung zum Umverteilen sind in dieser Ebene vorzugsweise (aber nicht zwingend) horizontal und parallel zueinander ausgerichtet. Es ist zu sehen, dass die Förderbänder beidseitig an den Holmen 64, 66 der gemeinsamen Tragstruktur angeordnet sind, damit eine ausreichende Steifigkeit der Vorrichtung erzielt wird, um je nach Zähigkeit des Wurstbräts bzw. Füllguts ausreichend große Kräfte zum Umformen ausüben zu können.

## Patentansprüche

1. Herstellanlage für mit pastösem Füllgut gefüllte Würste mit
einem Füllrohr (10), durch welches das Füllgut in eine über den Außenumfang des Füllrohres zugeführte schlauch- oder beutelförmigen Verpackungshülle (12) einbringbar ist, und
einer stromabwärts der Füllrohrmündung (14) angeordneten Verschließvorrichtung (20) zum Abteilen, Verschließen einer Wurst (26) mittels Verschlussklammern (18) und vereinzeln der verschlossenen Wurst (26), und einer stromabwärts der Verschließvorrichtung (20) angeordneten Vorrichtung (30) zum Umverteilen von pastösem Füllgut in einer verschlossenen, vereinzelten, schlauch- oder beutelförmigen Verpackungshülle (12) mit wenigstens zwei einander zugewandte erste Bandabschnitte (38, 40) aufweisenden Förderbändern (32, 34), so dass zwischen den ersten Bandabschnitten (38, 40) ein Durchlassquerschnitt (54) gebildet wird, und einem Antrieb (42, 44) für die Förderbänder (32, 34), welcher eingerichtet ist, diese mit den einander zugewandten Bandabschnitten (38, 40) im Wesentlichen gleichlaufend in Förderrichtung (46) anzutreiben,
**dadurch gekennzeichnet, dass** zwischen die Verschließvorrichtung (20) und die Vorrichtung (30) zum Umverteilen des Füllgutes ein aktiv angetriebenes Transportband (28) zum Abfördern und Zuführen der verschlossenen Wurst (26) eingeschaltet ist.

2. Herstellanlage nach Anspruch 1,
**dadurch gekennzeichnet, dass** die Förderbänder (32, 34) so zueinander anstellbar sind, dass sich der Durchlassquerschnitt (54) in Förderrichtung (46) verjüngt.

3. Herstellanlage nach Anspruch 1 oder 2,
**gekennzeichnet durch** einen gegenüber dem Durchlassquerschnitt (54) aufgeweiteten Einlaufbereich der Förderbänder, (32, 34) der sich in Förderrichtung (46) auf den Durchlassquerschnitt (54) verjüngt.

4. Herstellanlage nach einem der vorstehenden Ansprüche,
**dadurch gekennzeichnet, dass** die Förderbänder (32, 34) an einer gemeinsamen Tragstruktur angeordnet sind, wobei wenigstens eines der Förderbänder (32) von wenigstens zwei in Förderrichtung (46) versetzten und quer zur Förderrichtung (46) unabhängig verstellbaren Tragelementen (64, 66) gehalten wird, mittels denen sowohl der Durchlassquerschnitt (54) als auch die Anstellung der Förderbänder (32, 34) zueinander verändert werden kann.

5. Herstellanlage nach Anspruch 1,
**dadurch gekennzeichnet, dass** der Vorrichtung (30) zum Umverteilen des Füllgutes ein Formkasten (60) zur Formgebung der Wurst (26) nachgeschaltet ist.

6. Verwendung der Vorrichtung (30) zum Umverteilen von pastösem Füllgut in einer verschlossenen schlauch- oder beutelförmigen Verpackungshülle (12) in einer Herstellanlage nach einem der Ansprüche 1 bis 7,
**dadurch gekennzeichnet, dass** zwischen die Verschließvorrichtung (20) und die Vorrichtung (30) zum Umverteilen des Füllgutes ein aktiv angetriebenes Transportband (28) zum Abfördern und Zuführen der verschlossenen Wurst (26) eingeschaltet ist.

7. Verfahren zum Umverteilen von pastösem Füllgut in einer verschlossenen, vereinzelten, schlauch- oder beutelförmigen Verpackungshülle (12) mit den Schritten
Einführen der mit pastösem Füllgut gefüllten, verschlossenen und vereinzelten Verpackungshülle (12) in eine Anordnung wenigstens zweier einander zugewandte erste Bandabschnitte (38, 40) aufweisender Förderbänder (32, 34) und Fördern der Verpackungshülle (12) durch einen zwischen den ersten Bandabschnitten (38, 40) gebildeten Durchlassquerschnitt (54), der so bemessen ist, dass das Füllgut beim Fördern im Wesentlichen über die gesamte Länge der verschlossenen schlauch- oder beutelförmigen Verpackungshülle (12) verteilt wird,
**gekennzeichnet durch** den Schritt des Transports der mit pastösem Füllgut gefüllten, verschlossenen und vereinzelten Verpackungshülle (12) von der Verschließvorrichtung (20) zur Vorrichtung (30) zum Umverteilen des Füllgutes mittels eines dazwischen geschalteten aktiv angetriebenen Transportbandes (28).

## Claims

1. A manufacturing plant for manufacturing sausages filled with a pasty filling product, comprising a filling tube (10) through which the filling product can be filled into a hose- or bag-type casing (12) supplied over the outer circumference of the filling tube, and
a closing device (20) provided downstream of the filling tube mouth (14), for partitioning and closing a sausage (26) with closing clips (18), and separating the closed sausage (26), and a device (30) provided downstream of the closing device (20), for redistributing a pasty filling product in a closed, separated, hose- or bag-type casing (12), comprising conveying belts (32, 34) with at least two first belt sections (38, 40) facing one another so as to form a passage section (54) between said first belt sections (38, 40), and a drive (42, 44) for said conveying belts (32, 34) adapted to drive the latter essentially synchronously in the direction of conveyance (46) with the belt sections (38, 40) facing one another,
**characterised in that** an actively driven conveyor belt (28) for discharging and feeding in the closed sausage is provided between the closing device (20) and the device (30) for redistributing the filling product.

2. A manufacturing plant as set forth in claim 1,
**characterised in that** the conveyor belts (32, 34) can be adjusted in relation to one another so that the passage section (54) narrows in the direction of conveyance (46).

3. A manufacturing plant as set forth in claim 1 or 2,
**characterised by** a feed-in section of the conveyor belts (32, 34) which is wider than the passage section (54) and is gradually reduced to the width of the passage section (54) in the direction of conveyance (46).

4. A manufacturing plant as set forth in any of the preceding claims,
**characterised in that** the conveyor belts (32, 34) are mounted on a common supporting structure, wherein at least one (32) of the conveyor belts is supported by at least two supporting elements (64, 66) which are offset in the direction of conveyance (46), and are independently adjustable in a direction transverse to the direction of conveyance (46), by means of which the passage section (54) as well as the relative angular positions of the conveyor belts (32, 34) can be modified.

5. A manufacturing plant as set forth in claim 1,
**characterised in that** a shaping case (60) for shaping the sausage (26) is provided downstream of the device (30) for redistributing the filling product.

6. Use of the device (30) for redistributing pasty filling product within a closed hose- or bag-type casing (12) in a manufacturing plant as set forth in any of claims 1 to 7,
**characterised in that** an actively driven conveyor belt (28) for feeding in and discharging closed sausages (26) is provided between the closing device (20) and the device (30) for redistributing the filling product.

7. A method of redistributing pasty filling product within a closed, separated, hose- or bag-type casing (12), comprising the steps of
introducing the closed and separated casing (12) filled with a pasty filling product into an arrangement of conveyor belts (32, 34) comprising at least two first belt sections (38, 40) facing one another, and conveying said casing (12) through a passage section (54) formed between said first belt sections (38, 40) which is dimensioned such that the filling product is distributed over essentially the overall length of the closed hose- or bag-type casing (12) during conveyance,
**characterised by** the step of conveying the closed and separated casing (12) filled with a pasty filling product from the closing device (20) to the device (30) for redistributing the filling product by means of an intermediate actively driven conveyor belt (28).

## Revendications

1. Installation de fabrication de saucisses emplies de produit de remplissage pâteux, comprenant :
un tube (10) de remplissage, par lequel le produit de remplissage peut être introduit dans une gaine (12) d'emballage, en forme de boyau ou de sachet, amenée par le pourtour extérieur du tube de remplissage, et
un dispositif (20) de fermeture, disposé en aval de l'embouchure (14) du tube de remplissage pour la division, la fermeture d'une saucisse (26) au moyen d'agrafes (18) de fermeture et l'individualisation de la saucisse (26) fermée, et un dispositif (30), disposé en aval du dispositif (20) de fermeture, pour répartir du produit de remplissage pâteux dans une gaine (12) d'emballage fermée, individualisée, en forme de boyau ou de sachet, ayant au moins deux bandes (32, 34) convoyeuses ayant deux premiers tronçons (38, 40) de bande tournés l'un vers l'autre, de manière à former une section transversale (54) de passage entre les premiers tronçons (38, 40) de bande et un entraînement (42, 44) des bandes (32, 34) convoyeuses, qui est conçu pour les entraîner sensiblement dans le même sens dans la direction (46) de transport par les tronçons (38, 40) de bande tournés l'un vers l'autre,
**caractérisée en ce qu'**il est monté, entre le dispositif (20) de fermeture et le dispositif (30) pour répartir le produit de remplissage, une bande (28) convoyeuse entraînée activement pour l'évacuation et l'amenée de la saucisse (26) fermée.

2. Installation de fabrication suivant la revendication 1,
**caractérisée en ce que** les bandes (32, 34) convoyeuses peuvent être réglées l'une par rapport à l'autre de façon à ce que la section transversale (54) de passage se rétrécisse dans la direction (46) de convoyage.

3. Installation de fabrication suivant la revendication 1 ou 2,
**caractérisée par** une partie d'entrée des bandes (32, 34) convoyeuses, qui est élargie par rapport à la section transversale (54) de passage et qui se rétrécit dans la direction (46) de convoyage jusqu'à la section transversale (54) de passage.

4. Installation de fabrication suivant l'une des revendications précédentes,
**caractérisée en ce que** les bandes (32, 34) convoyeuses sont disposées sur une structure porteuse commune, au moins l'une des bandes (32) convoyeuses étant portée par au moins deux éléments (64, 66) porteurs décalés dans la direction (46) de convoyage et réglables indépendamment transversalement à la direction (46) de convoyage, éléments au moyen desquels on peut modifier tant la section transversale (54) de passage qu'également la position des bandes (32, 34) convoyeuses l'une par rapport à l'autre.

5. Installation de fabrication suivant la revendication 1,
**caractérisée en ce qu'**un caisson (60) de façonnage de la saucisse (26) est monté en aval du dispositif (30) de répartition du produit de remplissage.

6. Utilisation du dispositif (30) pour répartir du produit de remplissage pâteux dans une gaine (12) d'emballage fermée en forme de boyau ou en forme de sachet dans une installation de fabrication suivant l'une des revendications 1 à 7,
**caractérisée en ce qu'**entre le dispositif (20) de fermeture et le dispositif (30) pour répartir du produit de remplissage est montée une bande (28) convoyeuse entraînée activement pour évacuer et amener la saucisse (26) fermée.

7. Procédé pour répartir du produit de remplissage pâteux dans une gaine (12) d'emballage fermée, individualisée, en forme de boyau ou de sachet, comprenant les stades dans lesquels
on introduit la gaine (12) d'emballage, emplie de produit de remplissage pâteux, fermée et individualisée dans un agencement d'au moins deux bandes (32, 34) convoyeuses ayant des premiers tronçons (38, 40) de bande tournés l'un vers l'autre et on fait passer la gaine (12) d'emballage dans une section transversale (54) de passage formée entre les tronçons (38, 40) de bande, section dont la dimension est telle que le produit de remplissage est, lors du passage, sensiblement réparti sur toute la longueur de la gaine (12) d'emballage fermée, en forme de boyau ou de sachet,
**caractérisé par** le stade de transport de la gaine (12) d'emballage, emplie de produit de remplissage pâteux, fermée et individualisée, du dispositif (20) de fermeture au dispositif (30) pour répartir du produit de remplissage au moyen d'une bande (28) convoyeuse montée entre eux et entraînée activement.
